(19) Europäisches Patentamt / European Patent Office / Office européen des brevets

(11) **EP 2 479 529 A1**

(12) **EUROPEAN PATENT APPLICATION**

(43) Date of publication:
**25.07.2012 Bulletin 2012/30**

(51) Int Cl.:
*G01B 5/00* (2006.01)     *G01B 5/30* (2006.01)

(21) Application number: **11425015.2**

(22) Date of filing: **24.01.2011**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Agisco S.r.l.**
**20124 Milano (IT)**

(72) Inventors:
• **Robotti, Franco**
  **20090 Segrate (MI) (IT)**
• **Invernizzi, Sergio**
  **26027 Rivolta D'Adda (MI) (IT)**

(74) Representative: **Zizzari, Massimo**
**Studio Zizzari**
**P.le Roberto Ardigò, 42**
**I-00142 Roma (IT)**

(54) **Deformation meter with compensation in respect of thermal variations**

(57)     Deformation meter (100), with compensation in respect to thermal variations, particularly suitable to be attached outside of structures and/or buildings that should be monitored, characterized in that comprising a special sleeve (110), that further comprises:

- a first element (102), with an end attached to an end of a measurement rod (101), that is made of a first metallic material, having a coefficient of thermal linear expansion ($\alpha$); said element (102) being made of a second metallic material, having a coefficient of thermal linear expansion ($\beta$);
- a second element (106), called *reference,* that is fixed and placed in touch with the lateral walls of said element (102), and being attached to the structure and/or building to be monitored,

so that a thermal variation of environmental conditions causes a longitudinal extension of the above said measurement rod (101), and said extension results to be compensated by said special sleeve (110), so that the global extension of the whole deformation meter (100), in respect to said *reference* (106), results to be null in respect to variations of temperature.

**Fig. 3**

**Description**

The present invention is related to a permanent deformation meter, that is a measurement device used in order to monitor structures and/or buildings, and suitable to detect variations of distance between two points, with an accuracy near to a thousandth of a millimeter.

The two measuring points are specified by two *references,* that are particular elements made of steel, mechanically placed so that their ends are jointed to the object to be monitored, using glues, fast setting resins, or mechanical anchorages that achieve a stable placement and avoid any possible detachment or deformation due to thermal effects.

The displacements of the *references* are detected by a sensor embedded in the instrument, and having a sensitivity in the order of the thousandth of a millimeter. Therefore, the detected variations of distance are the variations of distance between the two *references,* due to deformations of object that is under observation, and said variations are compared to *initial zero values.*

The permanent deformation meters are characterized by a higher accuracy and easy use, in respect i.e. to extensometers that can be inserted and embedded in concrete during the building process of structures. However, deformation meters are placed outside and they are subject to natural events and variations of weather conditions. In order to avoid any inconvenience, some special materials are used, resilient to corrosion and characterized by a small thermal deformation due to variations of temperature, like i.e. metallic alloys like *invar.*

However, when the expected accuracy of measurements is in the order of a thousandth of a millimiter, even small deformations typical of *invar* alloys become very significant, and they give a contribution of error to a final detected measure.

The present invention will overcome and solve the above problems, its main goal consisting in the development of an additional element, that is a special sleeve, placed between a measurement rod and a *reference* of a deformation meter, so that possible variations in length, occurring in the same measurement rod, can be compensated; said variations in length being due to variations of the environmental temperature.

Another goal of invention is that said compensations of variations in length can be achieved automatically and mechanically, at the origin, without any need to change the numerical value of detected measures.

Another further goal of invention is that the deformation meter can use any *standard* sensors or transducers as components, without any need to modify the chain of measurement, due to compensation of thermal variations.

Another goal is that the proposed mechanical compensation system can be used in addition to, or integrated to, other compensation systems, based i.e. on *software* methods, changing numerical values of detected measures, according to mathematical models describing the deformation of materials consequent to variations of temperature.

Therefore, it is specific subject of the present invention a deformation meter, with compensation in respect to thermal variations, particularly suitable to be attached outside of structures and/or buildings that should be monitored, characterized in that comprising a special sleeve, that further comprises:

- a first element, with an end attached to an end of a measurement rod, that is made of a first metallic material having a coefficient of thermal linear expansion ($\alpha$); said element being made of a second metallic material, having a coefficient of thermal linear expansion ($\beta$);
- a second element, called *reference,* that is fixed and placed in touch with the lateral walls of said element, and being attached to the structure and/or building to be monitored,
  so that a thermal variation of environmental conditions causes a longitudinal extension of the above said measurement rod, and said extension results to be compensated by said special sleeve, so that the global extension of the whole deformation meter, in respect to said *reference,* results to be null in respect to variations of temperature.

Compared to known devices, the present invention offers further advantages, like i.e.: it achieves a high accuracy of the detected deformations, with an error in the order of a thousandth of a millimeter; *standard* and cheap components can be used, having a low level of complexity, so that the entire device has a very cheap cost and it is characterized by a low activity for management and maintenance.

This invention is now being described for illustrative but non-limiting purposes, with particular reference to figures of the enclosed drawings, where:

figure 1 is a perspective view of a deformation meter with a compensation of thermal variations, according to the present invention;
figure 2 is a top view of a special sleeve able to compensate the effects of thermal variations;
figure 3 is a view of a lateral section of a special sleeve able to compensate the effects of thermal variations;
figure 4 is a perspective view of a deformation meter with a compensation of thermal variations, and the point of view is from the side where a measurement device is placed;
figure 5 is a lateral perspective view of a measurement device that is placed on a deformation meter with a compensation of thermal variations.

It is here underlined that only few of the many conceivable embodiments of the present invention are described, which are just some specific non-limiting examples, having the possibility to describe many other embodiments based on the disclosed technical solutions of the present invention.

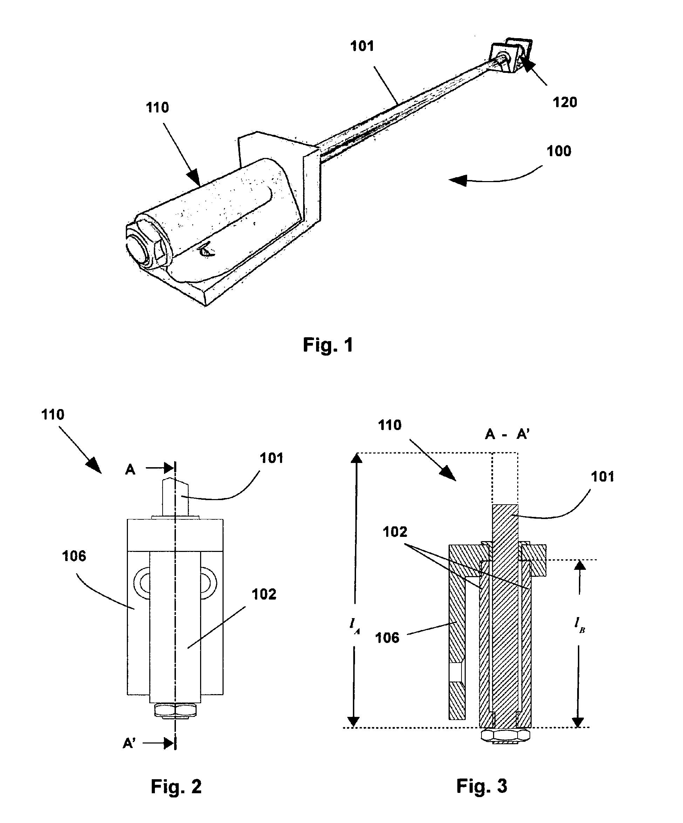

In figure 1 it is shown a deformation meter 100 comprising a measurement rod 101, a sleeve 110 compensating thermal variations, and a measurement device 120. The same deformation meter 100 is attached, using two *references,* to a structure and/or a building to be monitored.

Figures 2 and 3 show a sleeve 110 compensating thermal variations, that is essentially composed of: a tube 102, with a threaded end that is jointed to a *reference,* that is further fixed and attached to the above said structure and/or building to be monitored. At the end of tube 102 there is a housing where an end of said measurement rod 101 can be inserted, made of a first metallic material, as i.e. metallic alloys like *invar,* having a coefficient of thermal linear expansion ($\alpha$).

The element 102, has lateral walls made of a second metallic material, having a coefficient of thermal linear expansion ($\beta$).

In the above said deformation meter 100 a thermal variation of environmental conditions causes a longitudinal extension of the above said measurement rod 101, and said extension results to be compensated by said special sleeve 110.

In particular, it is possible to design components so that the global extension of the whole deformation meter 100, in respect to said *reference* 106, results to be null in respect to variations of temperature.

With reference to figure 3, it is defined $l_A$ as length of a measurement rod 101, and $l_B$ as length of lateral walls of tube 102. Therefore, the total length of measurement rod 101 up to sleeve 110 can be defined as:

$$d = l_A - l_B \qquad (1)$$

Considering two different temperatures, $T_1$ and $T_2$, with $T_2 > T_1$, the respective total lengths $d_1$ and $d_2$ of a measurement rod 101, up to sleeve 110, are:

$$d_1(T_1) = l_A^{(1)} - l_B^{(1)} \qquad (2)$$

$$d_2(T_2) = l_A^{(2)} - l_B^{(2)} \qquad (3)$$

Therefore, a variation in length as a function of temperature is given by:

$$\Delta d = d_2 - d_1 = (l_A^{(2)} - l_A^{(1)}) - (l_B^{(2)} - l_B^{(1)}) = \Delta l_A - \Delta l_B \qquad (4)$$

that is:

$$\Delta d = \Delta l_A - \Delta l_B \qquad (5)$$

Now, it is considered the condition that variations in length of a deformation meter 100, in respect to said *reference* 106, results to be null in respect to variations of temperature, that is stated by the following equation:

$$\Delta d = 0 \quad \longrightarrow \quad \Delta l_A = \Delta l_B \qquad (6)$$

Considering variations in lengths $\Delta l_A$, $\Delta l_B$, as functions of variations of temperature $\Delta T$, it is obtained:

$$l_A^{(2)}=l_A^{(1)}[1+\alpha(T_2-T_1)] \quad \longrightarrow \quad \Delta l_A = l_A^{(1)}\alpha\Delta T \qquad (7)$$

$$l_B^{(2)}=l_B^{(1)}[1+\beta(T_2-T_1)] \quad \longrightarrow \quad \Delta l_B = l_B^{(1)}\beta\Delta T \qquad (8)$$

where $\alpha$ is the coefficient of thermal linear expansion of measurement rod 101, and $\beta$ is the coefficient of thermal linear expansion of lateral walls of tube 102. Replacing (7) and (8) in formula (10), it is obtained:

$$l_A^{(1)}\alpha\Delta T = l_B^{(1)}\beta\Delta T \qquad (9)$$

that is:

$$l_A^{(1)}\alpha = l_B^{(1)}\beta \qquad (10)$$

Formula (10) permits to define length $l_B$ of lateral walls of sleeve 110, as a function of length $l_A$ of measurement rod 101, and as a function of coefficients of thermal linear expansions $\alpha$ and $\beta$, with reference to chosen materials for components. Formula (10) is definitely valid for small variations of temperature, where $\alpha$ and $\beta$ can be considered as constants.

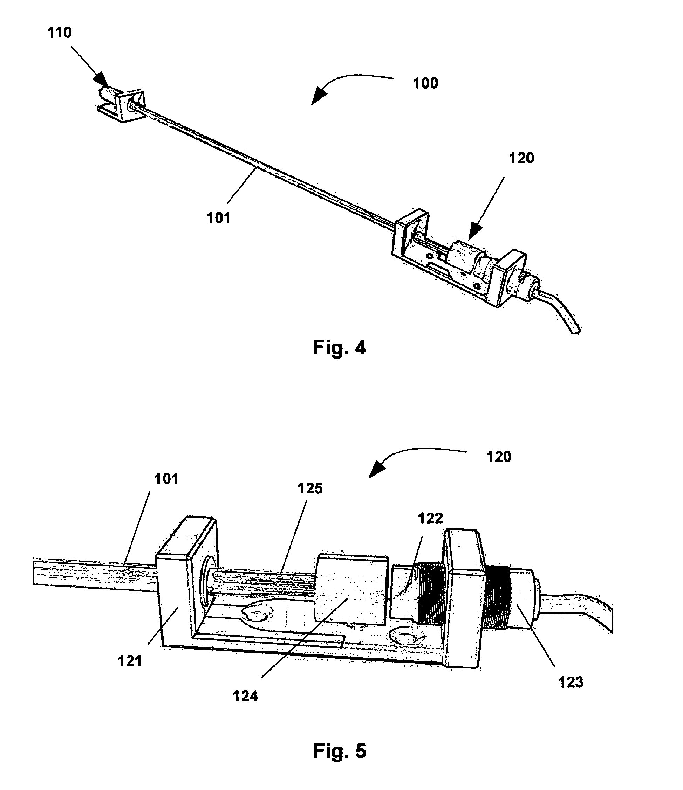

Figures 4 and 5 give a better view of the measurement device 120, that is placed at the opposite end of the deformation meter 100, in respect to said sleeve 110. This device 120 essentially comprises: a clamp 121, that is attached to the structure and/or the building to be monitored, where the measurement rod 101 can translate inside, having an element 124 attached at the end, called *target;* and a proximity sensor 123 able to detect the distance of part 122 from said *target* 124, to convert said information into digital data, and to transmit said data to a remote control unit.

The measurement device 120 is used, in a first instance, in order to detect and define the *position of zero,* that is the initial distance between said two *references* of the deformation meter 100, in respect to structure and/or building to be monitored, and in the following instances in order to detect the relative displacements of the proximity sensor 123 in respect to said *target* 124, and therefore the relative displacements of said two *references,* in respect to their *position of zero.*

After description of the above examples there is evidence to say that this invention achieves all its goals and, in particular, the development of an additional element, that is a special sleeve, placed between a measurement rod and a *reference* of a deformation meter, so that possible variations in length, occurring in the same measurement rod, are compensated; said variations in length being due to variations of the environmental temperature.

Furthermore, said compensations of variations in length are achieved automatically and mechanically, at the origin, without any need to change the numerical value of the detected measures.

Further according to the invention, the deformation meter can use any *standard* sensors or transducers as components, without any need to modify the chain of measurement, due to compensation of thermal variations.

Another achievement consists in that the proposed mechanical compensation system can be used in addition to, or integrated to, other compensation systems, based i.e. on *software* methods changing numerical values of detected measures, according to mathematical models describing the deformation of materials consequent to variations of temperature.

This invention is described for illustrative but non-limiting purposes, following some preferred achievements; however it goes without saying that modifications and/or changes would be introduced without departing from the relevant scope, as defined in the enclosed claims.

**Claims**

1. Deformation meter (100), with compensation in respect to thermal variations, particularly suitable to be attached outside of structures and/or buildings that should be monitored, **characterized in that** comprising a special sleeve (110), that further comprises:

- a first element (102), with an end attached to an end of a measurement rod (101), that is made of a first metallic material, having a coefficient of thermal linear expansion ($\alpha$); said element (102) being made of a second metallic material, having a coefficient of thermal linear expansion ($\beta$);
- a second element (106), called *reference,* that is fixed and placed in touch with the lateral walls of said element (102), and being attached to the structure and/or building to be monitored,

so that a thermal variation of environmental conditions causes a longitudinal extension of the above said measurement rod (101), and said extension results to be compensated by said special sleeve (110), so that the global extension of the whole deformation meter (100), in respect to said *reference* (106), results to be null in respect to variations of temperature.

2. Deformation meter (100), with compensation in respect to thermal variations, according to previous claim 1, **characterized in that**, defined $l_A$ as length of the measurement rod (101), and $l_B$ as length of the lateral walls of element (102), it is stated:

$$l_A \alpha = l_B \beta$$

where $\alpha$ is the coefficient of thermal linear expansion of measurement rod (101), and $\beta$ is the coefficient of thermal linear expansion of lateral walls of element (102).

3. Deformation meter (100), with compensation in respect to thermal variations, according to one or more of previous claims, **characterized in that** material chosen for measurement rod (101) is a metallic alloy of *invar.*

4. Deformation meter (100), with compensation in respect to thermal variations, according to one or more of previous claims, **characterized in that** further comprising:

- a measurement device (120), that is placed at the opposite end of the deformation meter (100), in respect to said sleeve (110); said device (120) further comprising: a clamp (121), that is attached to the structure and/or the building to be monitored, where the measurement rod (101) can translate inside, having an element (124) attached at the end, called *target;* and a proximity sensor (123) able to detect the distance of part (122) from said *target* (124), to convert said information into digital data, and to transmit said data to a remote control unit.

5. Deformation meter (100), with compensation in respect to thermal variations, according to previous claim 4, **characterized in that**:

- The measurement device (120) is used, in a first instance, in order to detect and define the *position of zero*, that is the initial distance between said two *references* of the deformation meter (100), in respect to structure and/or building to be monitored, and in the following instances in order to detect the relative displacements of the proximity sensor (123) in respect to said *target* (124), and therefore the relative displacements of said two *references*, in respect to their *position of zero*.

**Fig. 1**

**Fig. 2**

**Fig. 3**

110

100

120

101

**Fig. 4**

101

125

120

122

121

124

123

**Fig. 5**

Europäisches
Patentamt

European
Patent Office

Office européen
des brevets

## EUROPEAN SEARCH REPORT

Application Number

EP 11 42 5015

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | GB 1 540 018 A (CHARBONNAGES DE FRANCE) 7 February 1979 (1979-02-07) * page 1, lines 11-16 * * page 1, line 51 - page 2, line 7 * * page 2, lines 66-118 * * figures 1,2 * | 1-5 | INV. G01B5/00 G01B5/30 |
| X | JP 58 063804 A (HITACHI LTD) 15 April 1983 (1983-04-15) * abstract; figures 1,2 * | 1-5 | |
| X | EP 2 275 642 A1 (AGISCO S R L [IT]) 19 January 2011 (2011-01-19) * paragraph [0028] * * claims 1,8; figures 1,4 * | 1-5 | |
| A | US 3 334 419 A (HENRY JAYE WILLIAM) 8 August 1967 (1967-08-08) * column 2, line 34 - column 3, line 2 * * figure 1 * | 1-5 | |
| A | US 4 282 688 A (KRIM MICHAEL K) 11 August 1981 (1981-08-11) * abstract; figure 1 * * column 2, lines 17-60 * | 1-5 | TECHNICAL FIELDS SEARCHED (IPC) G01B |

The present search report has been drawn up for all claims

| Place of search | Date of completion of the search | Examiner |
|---|---|---|
| Munich | 1 June 2011 | Passier, Martinus |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 11 42 5015

This annex lists the patent family members relating to the patent documents cited in the above-mentioned European search report.
The members are as contained in the European Patent Office EDP file on
The European Patent Office is in no way liable for these particulars which are merely given for the purpose of information.

01-06-2011

| Patent document cited in search report | | Publication date | Patent family member(s) | | Publication date |
|---|---|---|---|---|---|
| GB 1540018 | A | 07-02-1979 | BE ES FR | 855277 A1 459451 A1 2353827 A1 | 01-12-1977 01-05-1978 30-12-1977 |
| JP 58063804 | A | 15-04-1983 | NONE | | |
| EP 2275642 | A1 | 19-01-2011 | NONE | | |
| US 3334419 | A | 08-08-1967 | CH GB | 425245 A 1059167 A | 30-11-1966 15-02-1967 |
| US 4282688 | A | 11-08-1981 | NONE | | |

EPO FORM P0459

For more details about this annex : see Official Journal of the European Patent Office, No. 12/82